# EUROPEAN PATENT SPECIFICATION

(11) **EP 3 224 017 B1**
(45) Date of publication and mention of the grant of the patent: **10.10.2018**
(21) Application number: 15798433.7
(22) Date of filing: 24.11.2015
(51) Int. Cl.: B29C 47/92, B29C 47/08

(54) **INTEGRATED PROCESS FOR PRODUCING POLYESTER TAPE**
INTEGRIERTES VERFAHREN ZUR HERSTELLUNG EINES POLYESTERFILMS
PROCÉDÉ INTÉGRÉ POUR PRODUIRE UN FILM EN POLYESTER

(30) Priority: 26.11.2014 EP 14194956
(43) Date of publication of application: 04.10.2017
(73) Proprietor: SABIC Global Technologies B.V., 4612 PX Bergen op Zoom (NL)
(72) Inventor: TERPSMA, Jelle, 6160 GA Geleen (NL); BASHIR, Zahir, 11422 (SA); JOSHI, Rajiva, 11422 (SA)
(74) Representative: Sabic Intellectual Property Group
(86) International application number: PCT/EP2015/077403
(87) International publication number: WO 2016/083326

(56) References cited:
- WO-A1-2013/087200
- "ASR Automatic Scrap Recycling", 20120717 , 17 July 2012 (2012-07-17), pages 1-8, XP007922056, Retrieved from the Internet: URL:http://www.process-control.com/pdf/ASR Brochure.pdf

## Description

The present invention relates to a process for producing polyester tape.

It is generally known that the industrially established tape products are currently made from polypropylene (PP) and polyethylene (PE); the three main applications being high modulus tapes, weaving tapes, baler twines and rope strands (see F. Hensen, Man-Made Fiber Year Book (CTI), 45-48, 1992). It is also commonly recognized that PP is the dominant synthetic polymer for uniaxially-oriented tapes from slit film; but high density polyethylene is also used. PP tape production has been established since the 1960s and occurs on a large scale world-wide. The article "Production of polyolefin tapes", F. Hensen, Man-Made Fiber Year Book (CTI), 45-48, 1992 reviews the technology for making uniaxially-oriented polypropylene and polyethylene tapes. The process for uniaxially orienting PP tapes comprises the steps of (1) extruding a film into a water bath or a chill roller; (2) slitting it into a plurality of tapes; (3) heating the tapes and stretching them simultaneously in an oven; (4) heat setting them at a higher temperature and (5) winding each uniaxially-oriented tape on a bobbin.

A tape in general is understood to mean a ribbon of plastic film, whose thickness is very thin in relation to its length and width. In the polypropylene tape industry, the tape thickness is in the range of 0.02 to 0.10 mm (20 µm to 100 µm) and the width is from 1 to 60 mm [see K.J. Philips and T.K. Ghosh "The Technology of Polypropylene Tape Yarns : Processing and Applications", Textile Progress, Volume 33, (2003), pages 1 - 53]. That is, the tape has a high width-to-thickness ratio. Typically the width is between 50-100 times larger than the thickness. The length of the tape can be indefinite, as the ribbons are normally made with a continuous extrusion process. The most common is to have a well-controlled rectangular cross-section, which is desirable for uniform drawing behaviour; however, profiled sections (corrugated, ribbed etc.) are also known (see K.J. Philips and T.K. Ghosh "The Technology of Polypropylene Tape Yarns : Processing and Applications").

Specific tape dimensions are established in the polypropylene tape industry, see F. Hensen, Production of Polyolefin Tapes, CFI Man-made Fiber Year Book, 1992, pages 44-48; also, F. Hensen and Stausberg, chapter 9, "Extrusion of Film Tapes', pp 317, Plastics Extrusion Technology, Ed. F. Hensen, 2nd edition, Hanser, 1997.

Polypropylene based weaving tapes generally have thicknesses in the range of 30-80 µm and a width of 1-3 mm. Polypropylene based strapping tape is exceptionally thick (300-600 µm) and generally has a width of between 4 and 16mm. A strapping tape is used to strap cartons and boxes.

The technical field of the present invention is the field of uniaxially oriented thin tapes from a predominantly polyester composition, with widths typically in the range of 1-9 mm, preferably 1-3 mm, and thicknesses typically in the range 30-100 microns.

These uniaxially oriented polyester tapes are intermediates to be used in other processes like weaving, to make woven-tape fabric. The products of weaving are the end articles such as for example sacks, flexible intermediate bulk containers, geotextiles and composites. Contrary to weaving tapes, strapping tapes are generally wide and thick and as a result strapping tapes cannot be woven in standard looms. In fact strapping tapes are generally used as the final product (to bind boxes, cartons, pallets with bricks, textile bales etc.).

Thermoplastic polyesters are essentially linear polymeric molecules containing ester groups in their chemical structure and are known to be truly versatile materials, being commonly used as fibers, plastics and films; in composites and elastomers; and as coatings. The production of polyesters by condensation of polyfunctional carboxylic acids with polyfunctional alcohols (or their ester-forming derivatives) is well known in the art, and is described in *e.g.* Encyclopaedia of Polymer Science and Engineering, 2nd ed., volume 12, John Wiley and Sons, New York, 1988. The most common thermoplastic polyester is polyethylene terephthalate (PET); this polyester is the cheapest and is industrially produced on a large scale. It is mainly used in industry for production of textile fibres, filaments, films and bottles.

It is commonly known that PET (polyethylene terephthalate) allows the possibility for obtaining higher tenacity (or specific tensile strength), higher modulus, better resistance to creep, transparency and gloss for the products made from it, compared with the products made of PP. Also, PET retains its mechanical properties to higher temperatures than PP. PP softens appreciably at 90°C and at 95°C, its tenacity is half that at 20°C. One factor that affects creep is the glass transition temperature T_{g} and its relation to room temperature. For PP, T_{g} is between -15 to 10°C, whereas for PET it is about 78°C.

Another important aspect about PET is that it has the potential to be recycled with its properties restored. It is well known that polymers degrade and there is a decrease in molecular weight during melt extrusion. In the case of PP, if recycled, the molecular weight of the polymer cannot be re-built; whereas with PET, the molecular weight can be restored to the original value by melt or solid-state polycondensation.

PET-based tapes are commonly known and have been industrially produced for video and audio magnetic tape. Such PET tapes are produced by slitting a biaxially-oriented PET (BOPET) film. The method of production of BOPET film for audio tape is described by W. Goerlitz and A. Ito in "Substrates for flexible magnetic recording media: The role of base films for modern performance requirements", Journal of Magnetism and Magnetic Materials, volume 120, 76-82, 1993. However, making PET tape from BOPET film is very expensive and its application was thus limited to audio and video tapes. The BOPET tape-process involves drying the PET resin, melt extrusion and casting of an amorphous film, biaxial stretching using a tenter frame that passes through a heated cabinet, followed by heat setting and then slitting the film into tapes. In the uniaxially-drawn tape process, the stretching process involves drawing the tapes through a heating cabinet, between rollers. In the BOPET line, the tenter frame for effecting the transverse direction (TD) draw raises the cost of the machinery to about 10 times that of a uniaxially-drawn tape process.

WO 03/087200 discloses a polyester strapping comprising more than 92% by weight polyester and less than 8% by weight of additives comprising one or more Polyolefins and optional additional additives, wherein the one or more Polyolefins constitute less than 3% by weight of the strapping. Examples of Polyolefins disclosed in WO 03/087200 include linear low density polyethylene, branched low density polyethylene, high density polyethylene and polypropylene. The strapping may have a width of about 0.5cm to 3.0 cm and a thickness of about 0.03cm to about 0.20.

US 6,589,463B1 relates to a process for producing mono-axially oriented polyethylene terephthalate film having increased mechanical strength in the machine direction. The film may be used as tear tape, carton tape, industrial tape to hold together heavy loads, or pull tabs on containers.

EP 0361758A2 discloses a yarn of substantially flat cross-section comprising a poly(ethylene terephthalate) component having dispersed therein about 17 wt.% to about 43 wt.% of a substantially crystalline propylene polymer component. The tape yarn is suitable for weaving, particularly into primary carpet backing fabrics for tufted carpet tiles and automotive carpets.

WO2012/041482 discloses a tape comprising a thermoplastic polyester and a linear low-density polyethylene wherein said tape has a thickness from 5 µm to 300 µm and a width from 0.5mm to 7mm. The linear low-density polyethylene allowed the manufacture of polyester tapes that, due to their low frictional heating and their reduced adhesion, do not stick to each other and do not twin after high speed slitting.

WO2013/087200 discloses a unidirectionally-oriented film comprising a composition consisting of a thermoplastic polyester (a) in an amount of 85 to 99.9 wt.%, based on the total composition; a polycarbonate (b) in an amount of 0.1 to 15 wt.%, based on the total composition; and an additive (c) in an amount of 0 to 10 wt.%, based on the total composition.

While the PET weaving tape has superior properties than PP tape, PET tape fabric has not become very established. Initially, this was due to technical problems such as splitting tendency of the tapes (arising from low extension to break and brittle failure) in weaving looms. This has been largely overcome as described in WO2012/041482. However, the production costs of the PET tape by a conventional process is still higher than that of PP. The PET tape has a higher density than PP tape, which is partially offset because PET has a higher strength than PP, so can be down gauged. Still, there are other factors that increase the cost of the tape. The PET chips need to be dried (typically 5 hours at 170°C), before they can be extruded into a film and slit into tapes. Further, the PET has a higher melting temperature than PP requiring more energy to be used in the process to manufacture the tapes. Hence, in order to make PET tape competitive cost reduction is desirable.

It is therefore an object of the invention to provide a process for producing a polyester tape in a more energy efficient and cost efficient manner.

Another object of the invention is to provide a process for producing a polyester tape having relatively constant and consistent properties.

Yet another object of the invention is to provide a process for producing a polyester tape partially based on recycled polyester and having relatively constant and consistent properties.

The present inventors found that the desired cost reduction can be provided by integration of the polyester tape line with the polyester manufacturing line (i.e. the reactor(s)).

Accordingly, the present invention provides an integrated process for the production of polyester tape, comprising the steps of
a) preparing feed polyester comprising a polymerisation reaction in one or more reactors in series and measuring the viscosity of the obtained feed polyester,
b) feeding the feed polyester obtained from step a) and optional additives to a melt mixing device, mixing said feed polyester and said optional additives so as to form a molten polyester composition and measuring the viscosity of the obtained polyester composition
c) extruding the molten polyester composition through a film extrusion die thereby forming a molten film of said polyester composition,
d) preparing a polyester tape from said polyester film, said preparing comprising trimming the edges of the film at a stage where said film is below its melting temperature,
e) feeding at least a part of the trimmed edges obtained in step d) in-line to the melt mixing device in step b)
wherein the amount of trimmed edges and optional further additives fed to the melt mixing device in step b) is controlled on the basis of the measured viscosity of the polyester composition.

Trimming of the edges in a process for making a tape in itself is known. A reason for trimming is that edges of a film cast from a slot die generally have a higher thickness. Consequently, in order to manufacture the desired tapes from the film the outer parts are trimmed off. In prior art processes such edge trim may be collected separately and either be discharged as industrial waste or extruded, pelletised, crystallised, dried and then added back to the tape extruder, or it be added as recycled material in other processes for making polyester products. The disadvantage of the edge trim is however that, compared to the volume, the trim has a significant amount of surface area that is in contact with the atmosphere which results in rather high absorbance of moisture. If such polyester edge trim would then be fed as a recycle stream to another process it will impact the viscosity of the resulting polyester product. As this is often undesired the recycled material usually requires intense drying prior to its re-use. The present inventors found that if the edge trims are recycled directly to the melt mixing device that the exposure to moisture is relatively short so that a drop in viscosity in the melt mixing device is reduced to a minimum. Moreover, the use of material is far more efficient as compared to a process wherein the edge trim is discharged or added to another process as recycle. Consequently, by application of the inventive process at least some of the aforementioned objects is met.

The viscosity as referred to for the feed polyester and the polyester composition is preferably measured as the melt viscosity. However for the principle underlying the present invention other viscosity measurements, such as measurement of the Intrinsic Viscosity (I.V.) are also possible. In fact, in practice the IV and melt viscosity are related so that measurements of one type of viscosity can be easily converted into another.

The (melt) viscosity of the polyester composition in the process according to the invention is preferable controlled such that the viscosity varies at most 10%, more preferably at most 5% with respect to a target value. In an even more preferred mode of operation the viscosity is controlled such that variations of the viscosity are at most 2% or 1% with respect to a target value.

The amount of edge trim that is added to the melt mixing device may be controlled on the basis of the measured (melt) viscosity. If the measured viscosity of the polyester composition drops below a certain lower limit then the amount of edge trim added is reduced.

In order however to utilize fully the amount of edge trim and so as to run the process at high efficiency it is preferred that after the edges are trimmed the trims are transported to the melt mixing device at least in part in an environment having a relative humidity of at most 10% when measured at 25°C at atmospheric pressure. More preferably the relative humidity is at most 5% or even at most 2%. This low relative humidity can be accomplished either by performing the entire process in a low humidity environment or by having such controlled humidity environment locally and around the path of transport between the point of edge trim and the melt mixing device. To that extent it is preferred to transport the edge trim (at least in part) through the inside of protective tubes. Such tubes may be of any suitable material including glass, ceramics and plastics, such as polycarbonate, polyvinylchloride, polypropylene, polyethylene and the like. The tubes may be purged with dried air (i.e. air having a low relative humidity) or with an inert gas such as for example nitrogen. In order to avoid formation of dust or angle hair the inside of the tube is preferably of a low friction material. Dimensions for the tubes are not critical as long as the polyester edge trim can be transported without too much friction causing the trim to break. Typical inner diameters may be from 2 to 15 cm depending mainly on the width of the edge trim.

As a further measure to control the (melt) viscosity of the polyester composition a certain amount of chain extender may be added to the melt mixing device. Hence, in case the viscosity would drop to below a certain lower limit the amount of chain extender may be increased thereby increasing the viscosity of the polyester again. This brings the added advantage that there is no need to reduce the amount of edge trim that is fed as a recycle stream to the melt mixing device. Chain extenders for increasing the viscosity of polyesters are known per se and include linear chain extenders and branched chain extenders. Linear chain extenders, as the name suggests, extend the polyester chains in a linear manner, whereas branched chain extenders extend the polyester chains in branched manner. The chain extender can be used to control viscosity drops as a result of using recycled trim. However it can further be used for raising the viscosity of the feed polyester emerging from the reactor. For example, if the polymer from the reactor has an I.V. of 0.64 dL/g, addition of a suitable amount of chain extender can raise the I.V. to 0.80 dL/g for example.

Chain extenders are molecules that have at least two functional groups capable of addition reactions with the terminal groups of the polyester which normally are hydroxyl and carboxyl groups. The chain extender can be selected from bisanhydrides, bisoxazolines, bisepoxides or carbonyl bis caprolactams; more particularly a chain extender is selected from 1,3- phenylenebisoxazoline, 1,4-phenylenebisoxazoline (PBO) or bisphenol A diglycidyl ether. A preferred chain extender is carbonyl bis (1-caprolactam) (CBC) which reacts with the hydroxyl terminal groups. Chain extenders can be enhanced when used in combination with each other, such as PBO reacting with the carboxyl groups and CBC reacting with the hydroxyl groups. A typical range of chain extender is about up to about 2 weight % of the polyester, such as from 0.1 or 0.5 to 1.5 or 1 weight %. The actual amount to be employed being dictated by the starting viscosity of the polyester prior to chain extension and the desired viscosity. In the context of the present invention it is preferred to use linear chain extenders. An examples of such a linear chain extender is carbonyl bis(1-caprolactam), also referred to as CBC. This material, commercially available from DSM under the brand name ALLINCO is a free flowing powder with a melting point of about 115°C. CBC reacts with terminal hydroxyl functional groups on the polyester chains during the processing of the polyesters forming carbonate, urethane and urea linkages. If a chain extender is added in step b), the appropriate comonomer constituting the chain extender is included in the polyester chain.

The feed polyester may be manufactured in step a) using only a melt polymerization process, or a melt polymerization process followed by a solid state polymerization (SSP). The latter process has the advantage that it allows the manufacture of polyester having a higher viscosity, which generally is preferred for uniaxially oriented tapes. Also, SSP allows the amount of acetaldehyde to be reduced, which is relevant for bottle grade polyester, but not so much for tape grade polyester. The downside of using the SSP route is that it involves additional process steps and cooling and re-heating of the polyester. This has the consequence that the cost benefit of the integrated process according to the invention is less pronounced.

In fact, the somewhat lower viscosity of polyester manufactured with (only) the melt polymerization process may still be acceptable and/or can be increased using chain extenders in a downstream reactive extrusion step.

In accordance with the invention, the feed polyester of step a) is fed directly to the melt mixing device of step b). In an embodiment where the polymerisation of the feed polyester is a melt polymerisation process this means that the melt may be added directly to the melt mixing device thereby saving the cost of cooling, pelletisation, bagging, transportation, unloading, drying, and re-heating for extrusion.

For the avoidance of doubt it should be understood that the full amount of feed polyester may be fed to the melt mixing device, but that it is also possible that only part of the feed polyester is fed to the melt mixing devices and that the remaining part is further processed elsewhere and out of the scope of the polyester tape manufacturing process. Further to that the feed polyester may be fed to a single melt mixing device or to a plurality melt mixing devices (and consecutive tape manufacturing lines) operating in parallel. Tape lines (and their melt mixing devices) operating in parallel may run using the same or different process settings hence provide the same or different type of products. For example a tape manufacturing line for manufacturing uniaxially oriented tapes may be run in parallel to a strapping manufacturing line manufacturing polyester strappings.

Additives to be added in the melt mixing device may include UV, colourants, stabilisers, anti-splitting additives and anti-blocking additives.

Anti-splitting additives, in particular polymeric anti-splitting additives are added to prevent splitting of the tapes during secondary operations (for example, weaving of the uniaxially oriented tapes into a fabric in looms).

Anti-blocking additives, such as for example nano-silica are added to prevent blocking, i.e. sticking the tapes after they are being wound on a bobbin. Anti-block additives like nano silica may be added in step a) or in step b).

The addition of the anti-splitting additives is done after step a), and in particular in step b). If the additives are added before the melt polycondensation, these anti-splitting additives do not mix well with the polyester matrix, they may foul the reactors, or generate copolymers of the polyester, which does not allow the anti-splitting additives to serve their purpose.

During the manufacture of the tapes it may further happen that one or more of the slit tapes breaks during the process. Preferably, these broken tapes are also recycled back to the melt mixing device of step b), which can be done for example by application of a vacuum suction unit placed along the tape line. In this case, the viscosity control takes into account the amount of the broken tapes to be fed as well as the polymeric additive so that the viscosity of the melt composition is maintained at a level suitable for polyester tape production. Since this type of recycle is not per se continuous in nature, the recycle tape may need to be stored and dried prior to its recycling. If the amount of such recycle is too low it may also be discharged as industrial waste.

Preferably, the amounts of the (polymeric) anti-splitting additive, edges and broken tapes to be added in step b) are controlled such that the viscosity of the melt composition is maintained at a constant level suitable for film production. Likewise the amounts are controlled such that the polyester composition is of constant chemical composition.

For the avoidance of doubt it should be understood that the addition of additives is not limited per se to step b). Certain additives may also be added during the polymerisation step if so preferred and if technically and technologically possible. It is however preferred to add additives in step b) as this allows for more flexibility of the overall process in particular when the feed polyester produced in step a) is partially further processed elsewhere.

In an exemplary embodiment, step a) comprises providing a first polyester melt composition with a low melt viscosity either by reaction of at least one dialcohol-based compound and at least one dicarboxylic acid-based compound or by melting recycled polyester flakes with low intrinsic viscosity. This first polyester melt composition with a low melt viscosity is then subjected to vacuum melt polycondensation to increase its melt viscosity. A second polyester melt composition with an increased viscosity is thus obtained, which may have an intrinsic viscosity of at least 0.50 dL/g. Preferably, the second polyester melt composition has an I.V. of at least 0.55 dL/g, more preferably at least 0.80 dL/g. A certain minimum I.V. is needed for extrudability and higher I.V. generally results in better mechanical properties, but too high a viscosity may hamper processing behaviour. Thus, I.V. is preferably at least 0.50, 0.55, 0.6, 0.65 or even 0.7 dL/g, and at most 2.5, 2.0, 1.8, 1.6 or 1.2 dL/g. The I.V. is herein measured in phenol-1,2 dichlorobenzene at 25°C. In the context of the present invention this resulting second polyester melt composition is referred to as "feed polyester", which is then added to step b) in the process of the invention.

### polyester

The polyester used in the present invention is a thermoplastic polyester which may be a crystallisable polyester derived from at least one dialcohol-based compound and at least one dicarboxylic acid-based compound.

The carboxylic acid-based compound may be a carboxylic acid or an ester-forming derivative thereof, like an ester, especially an alkyl- or hydroalkyl-ester, or acid chloride. Preferably, a dicarboxylic acid of the formula HOOC-R-COOH, wherein R is a - linear or branched - alkyl group, an arylene group, an alkenylene group or a combination thereof is used as carboxylic acid-based compound. Preferably, R has about 2 to 30, preferably about 4 to 15 carbon atoms. Suitable examples of carboxylic acid compounds may include saturated aliphatic dicarboxylic acids such as oxalic acid, malonic acid, succinic acid, gluratic acid, adipic acid, pimelic acid, suberic acid, azelaic acid, sebacic acid, decanedicarboxylic acid, dodecanedicarboxylic acid, tetradecanedicarboxylic acid, hexadecanedicarboxylic acid, 1,3-cyclobutanedicarboxylic acid, 1,3-cyclopentanedicarboxylic acid, 1,2-cyclohexanedicarboxylic acid, 1,3-cyclohexanedicarboxylic acid, 1,4-cyclohexanedicarboxylic acid, 2,5-norbornanedicarboxylic acid, and dimeric acid; unsaturated aliphatic dicarboxylic acids such as fumaric acid, maleic acid, and itaconic acid; and aromatic dicarboxylic acid such as orthophthalic acid, isophthalic acid, terephthalic acid, 5-(alkali metal)sulfoisophthalic acid, diphenic acid, 1,3-naphthalenedicarboxylic acid, 1,4-naphthalenedicarboxylic acid, 1,5-naphthalenedicarboxylic acid, 2,6-naphthalenedicarboxylic acid, 2,7-naphthalenedicarboxylic acid, 4,4,-biphenyldicarboxylic acid, 4,4'-biphenylsulfonedicarboxylic acid, 4,4'-biphenyl ether dicarboxylic acid, 1,2-bis(phenoxy)ethane-p,p'-dicarboxylic acid, pamoic acid, and anthracenedicarboxylic acid. Other dicarboxylic acids, and minor amounts of polycarboxylic acids or hydroxycarboxylic acids may also be used as constituent components.

More preferably, the carboxylic acid-based compound is at least one compound selected from the group comprising terephthalic acid, isophthalic acid, naphthalenic diacid, succinic acid, adipic acid, phthalic acid, glutaric acid, oxalic acid, and maleic acid. Most preferably, the carboxylic acid compound is terephthalic acid.

The alcohol-based compound may be a hydroxy-functional compound or an ester-forming derivative thereof, like an ester of a lower aliphatic carboxylic acid, such as acetic acid. Preferably, the alcohol-based compound is a bi-functional alcohol, like an alkylene glycol of the formula HO-R'-OH, a polyalkylene glycol having the formula HO-[R"-O-]ₙ-H or combinations thereof, wherein R' is an alkylene group, linear or branched, having 2 to about 10, preferably 2 to 4 carbon atoms, and wherein R", being the same or different, is an alkylene group having 1 to about 10, preferably 1 to 5 carbon atoms. Suitable examples of the alcohol-based compound include aliphatic glycols such as ethylene glycol, 1,2-propylene glycol, 1,3-propylene glycol, diethylene glycol, triethylene glycol, 1,2-butylene glycol, 1,3-butylene glycol, 2,3-butylene glycol, 1,4-butylene glycol, 1,5-pentanediol, neopentyl glycol, 1,6-hexanediol, 1,2-cyclohexanediol, 1,3-cyclohexanediol, 1,4-cyclohexanediol, 1,2-cyclohexanedimethanol, 1,3-cyclohexanedimethanol, 1,4-cyclohexanedimethanol, 1,4-cyclohexanediethanol, 1,10-decamethylene glycol, 1,12-dodecanediol, polyethylene glycol, polytrimethylene glycol, and polytetramethylene glycol; and aromatic glycols such as hydroquinone, 4,4'-dihydroxybisphenol, 1,4-bis(β-hydroxyethoxy)benzene, 1,4-bis(β-hydroxyethoxyphenyl)sulfone, bis(p-hydroxyphenyl)ether, bis(p-hydroxyphenyl)sulfone, bis(p-hydroxyphenyl)methane, 1,2-bis(p-hydroxyphenyl)ethane, bisphenol A, bisphenol C, 2,5-naphthalenediol, and glycols obtained by adding ethylene oxide to these glycols. Preferably, the alcohol-based compound is at least one compound selected from the group comprising ethylene glycol, 1,3-propylene glycol, 1,4-butylene glycol, and 1,4-cyclohexanedimethanol; and more preferably, ethylene glycol.

Small amounts of polyhydric alcohols may also be used in combination with these glycols. Suitable examples of polyhydric alcohols are trimethylolmethane, trimethylolethane, trimethylolpropane, pentaerythritol, glycerol, and hexanetriol. The hydroxycarboxylic acids may also be used in combination. Examples of hydroxycarboxylic acids may include lactic acid, citric acid, malic acid, tartaric acid, hydroxyacetic acid, 3-hydroxybutyric acid, p-hydroxybenzoic acid, p-(2-hydroxyethoxy)benzoic acid, 4-hydroxycyclohexanecarboxylic acid and their ester-forming derivatives. Also, cyclic esters in combination may be used in present invention. Examples of cyclic esters include ε-caproiactone, β-propioiactone, β-methyl-β-propiolactone 5-valerolactone, glycollide, and lactide.

The initial molar ratio of the carboxylic acid-based compound and the alcohol-based compound may be in the range of about 1:1 to about 1:3, preferably 1:1.2 to 1:2. Optimum ratio generally depends on reaction temperatures and time.

Terephthalic acid and ethylene glycol are the most preferred starting compounds for the thermoplastic polyester, according to the present invention.

Any suitable comonomer may be optionally contained in the thermoplastic polyester, such as isophthalic acid; 1, 4-cyclohexane dimethanol; branching comonomers, such as pentaerythritol or pyromellitic dianyhdride; and/or mixtures thereof. Preferably, isophthalic acid comonomer may be contained in the thermoplastic polyester component of the tape according to the present invention. Said comonomers may be contained in an amount of up to about 20 mol%, preferably about 1 to about 10 mol% or about 1 to about 5 mol%.

Preferably, the thermoplastic polyester according to the present invention is a polyethylene terephthalate (PET), polybutylene terephthalate (PBT), polypropylene terephthalate, poly(1,4-cyclohexanedimethylene terephthalate), polyethylene naphthalate (PEN), polybutylene naphthalate, polypropylene naphthalate, and their copolymers, and among them, polyethylene terephthalate homopolymer and copolymers are particularly preferred.

Copolymers that contain at least 50 mol% and preferably, at least 70 mol% or even at least 80, 90, 95 or 98 mol% of the ethylene-terephthalate repeating units may be also employed in the tape according to the invention. A suitable example is the standard bottle grade PET copolymers. Also, blends of various polyesters, such as copolymers of ethylene terephthalate with different comonomers having different intrinsic viscosities may also be used.

### Esterification

In an embodiment, step a) involves reacting an alcohol-based compound and a carboxylic acid-based compound followed by vacuum melt polycondensation. A first polyester melt composition obtained by the reaction of diol and diacid has a low intrinsic viscosity. This first polyester melt composition is subjected to vacuum melt polycondensation to increase the intrinsic viscosity.

The reaction of the alcohol-based compound and the carboxylic acid-based compound is typically performed in a paste mixing vessel and one or more esterification reactor, optionally followed by one or more pre-polycondensation reactor(s). The first polyester melt composition thus obtained, which is based on polyester oligomer, is subsequently subjected to vacuum melt polycondensation to obtain a second polyester melt composition having an intrinsic viscosity of at least 0.50 dL/g.

Typically, the alcohol-based compound (e.g. liquid ethylene glycol (EG)) and the carboxylic acid-based compound (e.g. pure terephthalic acid (PTA) powder) for reacting to produce polyester are first mixed in a paste mixing vessel. Catalyst (e.g. antimony triacetate) and any comonomers if desired (such as isophthalic acid or diethylene glycol) can be added in the paste mixing vessel.

In the following, a typical process for obtaining a first polyester melt composition by reacting terephthalic acid and ethylene glycol is described.

The PTA/EG paste/slurry is pumped from the paste mixing vessel into one or more esterification reactors in series. The esterification reactor(s) are stirred tanks. The esterification reaction may be conducted e.g. at 220-250°C. The product in the reactor is the molten diester diethylene glycol terephthalate (DGT) and oligomers. The water produced in the reaction is distilled out. Optional additives such as anti-block additives (e.g. silica, barium sulphate) and electrostatic pinning agents (e.g. magnesium acetate tetrahydrate) can also be added to the esterification reactor(s) as ethylene glycol dispersions.

The molten DGT and oligomers from the esterification reactor are continuously pumped into a stirred tank pre-polycondensation reactor at 270°C; a coarse vacuum is applied, and the volatile byproducts (ethylene glycol and water) are thereby removed. For the polycondensation reactions, the equilibrium has to be shifted to the high molecular weight side. For the equilibrium shift, the volatiles have to removed, and this necessitates the application of vacuum.

There may be more than one pre-polycondensation reactor. In this case, the molten oligomers from the first pre-polycondensation reactor are pumped into a second pre-polycondensation reactor. By the time the melt leaves the second pre-polycondensation reactor, a degree of polymerization of about 15 is typically reached.

### High vacuum melt polycondensation

The first polyester melt composition, which is a pre-polycondensed polyester, is subjected to final polycondensation to attain a desired intrinsic viscosity. Typically, a reactor for performing the vacuum melt polycondensation is referred as a final polycondensation reactor or a finisher reactor, which may be of a type called a disk ring reactor or a disk cage reactor.

A disk ring reactor or disk cage reactor is a horizontal reactor with the melt occupying about 1/3 of the height. There is a central shaft on which many disks with perforations are attached. The central shaft with the disks rotates. At the bottom of the reactor, the disks dip into the melt and thin films of melt are formed on the circular perforations on each disk. High vacuum (1 mbar) is applied at the top of the finisher reactor and the melt is at temperatures of 275-300°C. The thin molten films on the perforations have high surface area to volume. The ethylene glycol, which is the principal volatile polycondensation reaction byproduct, is removed efficiently by the vacuum, thus leading to increase in molecular weight.

The spacing of the disks increases towards the outlet end of the finisher reactor as the melt viscosity rises. As the melt progresses in the horizontal direction along the finisher reactor, the molecular weight increases, until it is discharged through the exit port of the finisher reactor.

If the emerging melt has a viscosity higher than the control viscosity, the vacuum in the finisher reactor is lowered; if the viscosity is lower, the vacuum is increased.

In this manner, polycondensation is conducted in the melt phase under high vacuum until a desired intrinsic viscosity (and melt viscosity) of the second polyester melt composition is obtained.

### melting of recycled polyester and vacuum melt polycondensation

Alternatively, and as already briefly discussed previously, the second polyester melt composition is made by melting recycled polyester flakes (sometimes referred herein as RPET) and subjecting the melted recycled polyester flakes to polycondensation to increase the intrinsic viscosity.

In this case, cleaned recycled polyester flakes are plastified by an extruder, which has deep filtration accessories to remove contaminants typically found with RPET to obtain the first polyester melt composition. The first polyester melt composition is subjected to the vacuum melt polycondensation as described above to increase the intrinsic viscosity.

The recycled polyester flakes used in the process according to the present invention as defined herein have to be substantially free of moisture before being melted in order to avoid hydrolysis of the thermoplastic polyester during processing resulting in loss of molecular weight and mechanical properties. The thermoplastic polyester may have up 50 ppm moisture; preferably, 10 ppm to 40 ppm; more preferably, 20 ppm to 30 ppm; and most preferably 10 to 15 ppm or less than 10 ppm. The moisture content can be estimated by the I.V. drop (the difference in I.V. of chips and cast film). This I.V. drop may be less than 0.05 dL/g; preferably, less than 0.03 dL/g; and most preferably, less than 0.02 dL/g for a moisture content of less than 50 ppm.

Drying of the thermoplastic polyester can be conducted in accordance with any known procedures. For instance, in vacuum ovens, double cone rotary vacuum dryers, fluidized bed dryers, hopper dryers, dry or hot air circulating, dehumidifying ovens, infrared heaters or twin-screw extruder systems with on-line venting may be used. The thermoplastic polyester can be dried at temperatures of about 148°C to about 177°C for about 3 to 5 hours using dehumidified air with a dew point of about -40°C.

In an embodiment, polyester obtained from a melt reactor having an I.V. of 0.60 - 0.64 dL/g is first pelletised to chips which are then subjected to a solid state polycondensation (SSP) step so as to raise I.V. to 0.70-1.0 dL/g, for example. The SSP reactor is for example a column reactor with a bed of pellets (or chips) moving downwards under gravity with counter current nitrogen flow. The SSP temperature is 180-220°C. In this embodiment, the hot and dry chips from the SSP reactor would then be fed to the melt mixing device of step b) as the feed polyester. This embodiment would still save some heating costs and drying albeit less compared to a process wherein the melt of the melt reactor is directly fed to the melt mixing device in step b).

### Step b)

The second polyester melt composition obtained in step a), which is referred to as "feed polyester" in the context of the present invention may subsequently be compounded with a polymeric anti-splitting additive. Preferably, the polymeric anti-splitting additive is selected from the group consisting of HDPE, LDPE, LLDPE, PP, polycarbonate and mixtures thereof. As the LLDPE, C8 LLDPE is particularly preferred.

It is generally not possible to add these additives in the step a) process(es). For example LLDPE would melt, but as it is not miscible with the polyester oligomer melt, it will form a separate layer and would deposit on the reactor walls. Polycarbonate (PC) on the other hand will melt and can trans-esterify with polyester and passing it through the reactors over a long period of time (about 5 hours) would cause a random PC- polyester copolymer to be formed. The resulting copolymer would no longer be favourable for reducing the splitting of the tapes.

Hence, the polymeric anti-splitting additives are compounded with the feed polyester just before the tape production unit. This is performed in a melt mixing device positioned after the final polycondensation reactor. Such a melt mixing device is preferably a continuous melt mixing device such as an extruder. Extruders used for manufacturing polyester compounds are known per se. A (vented) twin screw extruder is preferred over a single screw extruder as it gives high shearing for dispersive and distributive mixing. The vented twin screw extruder may be counter or co-rotating. It is preferred to use a side venting system. With this design, no deposits from the vents get back into the melt to contaminate it. Examples of such vented twin screw extruders are ZSK 70McPLUS, ZSK 92McPLUS or ZSK 70 MC18 from Coperion.

### Amount of polymeric additive

The amount of the polymeric anti-splitting additive in the polyester composition is preferably from about 0.1 wt.% to about 25 wt.% based on the total composition.

Preferably, the polyester composition comprises at least about 0.2 wt.%; 0.5 wt.%; 1 wt.%; 1.5 wt.%; 2 wt.%; 2.5 wt.%; 3 wt.%; 4 wt.%; 5 wt.% or 8 wt.%; and at most about 22 wt.%; 20 wt.%; 18 wt.%; 15 wt.%; 12 wt.% or 10 wt.% of the polymeric anti-splitting additive, based on the total composition. Higher amounts of the polymeric anti-splitting additive cause decrease in tenacity and decrease in modulus with increasing temperature, while lower polymeric anti-splitting additive amounts lead to sticking and/or twinning of the tape after slitting.

In step b), additives other than polymeric anti-splitting additives can also be added. These additives may be any conventional additives as known to the skilled person, like stabilizers, such as heat-stabilizers, anti-oxidants, and ultraviolet light stabilizers; processing aids such as lubricants and anti-blocking agents; and colorants, both pigments and dyes; opacifiers; compatibilisers, such as a copolymer of ethylene, acrylic acid ester and maleic anhydride or glycidyl methacrylate; catalyst residues may also be present. Such components may be added together with the anti-splitting additives or separately, at any time and in any order. Generally, each of such additives is used in an amount of some tenths of a percent up to some wt.%; the third polyester melt composition typically contains at most 5 wt.% of customary additives, preferably at most about 4 wt.%, 3 wt.%, 2 wt.% or even 1 wt.%.

### Step c) and step d)

The polyester melt composition is extruded through a film extrusion die into a molten film.

The extrusion die may be a mono-layer die so as to obtain a mono-layer film of the polyester composition.

In another embodiment the extrusion die may also be a multi-layer die, such as a three-layer die which allows the obtaining of an ABA-type multilayer film, wherein A are outer layers on both sides of a core layer B. This is of particular advantage in case it is desired to incorporate the anti-block only in the outer layers (A) of the tapes rather than in the entire tape. Typically such an anti-blocking layer has a thickness of only a few microns, such as from 1 - 10 microns or more preferably from 2 - 5 microns in the final tape. The base polyester resin for the anti-blocking layers A and the core layer B is preferably the same. The B layer preferably contains the anti-splitting agent.

To that extent it is preferred that the outlet of the extruder of step b) is connected to a flat die designed for casting polyester film over a chill roller. The molten polyester composition is then transferred to the slot die for film casting. The film may be cast over a chill roller or into a water bath, although the latter is less preferred as it requires thorough drying of the edge trim which will also be wet. While the transfer length for the feed polyester melt from step a) to the in-line melt mixing device of step b) is not critical, it is important to minimize the passage length from the melt mixing device delivering the polyester composition into the film casting die, in order to reduce and prevent agglomeration of the minor phase formed by the (polymeric) anti-splitting additives and keep the domain size of that minor phase as small as possible. The anti-splitting additives such as LLDPE, LDPE etc. are immiscible in the PET melt and the high shearing breaks them into small droplets; but if the shearing is reduced, there is a thermodynamic driving force for agglomeration of the droplets.

The composition may be extruded to form a molten web, by using any known techniques, as described for example in US 7,803,857. To secure a more stable drawing process, the thermoplastic polyester phase of the film is preferably substantially amorphous, having a crystallinity of at most 5%, as measured by the density method. Preferably the polyester phase has less than 3% crystallinity, more preferably less than 2 or 1%, and most preferably has no measurable crystallinity.

The extrusion temperature may range from about 270 to about 300 °C, preferably from about 275 to about 285 °C. Higher temperatures are avoided to minimize degradation of the resin components. Melt mixing may be efficiently performed by using a vented twin screw extruder.

Typically, a flat film die is used to extrude the molten polyester composition from the melt mixing device through the film extrusion die into a molten substantially amorphous film, also known in the prior art as web, that is then quenched to form a solid film. The dimensions of the die are chosen such to give a desired thickness and width for the film after (tape) drawing. A certain minimum thickness is needed to give a stable and uniform film extrusion; preferably the thickness is at least about 10 µm, more preferably at least 20 µm. Quenching can be done using known methods; preferably the film is cast onto one or more cooled drum(s) or chilled roller(s), which are preferably polished, to better control surface smoothness of the film, at a temperature of about 10 °C to about 30 °C, preferably of about 12 °C to about 20 °C. The molten film has preferably a thickness of at most about 3 mm, more preferably at most 300µm, 250µm or 150 µm. It is important that electrostatic pinning is used to pin the film to the chill roller to maximize its cooling and ensure film homogeneity. A full-width band or wire pinning device is used, in preference to edge pinning.

The width of the die and molten film may vary widely, for example from 0.1 to 3000 mm, preferably from 100 to 2000 mm. For example, for making uniaxially oriented tapes that have a finished width in the order of about 0.5 to about 7 mm, it is preferred to extrude a film, for example from about 1 to about 3 m wide, to trim the edges and then to slit the remaining film into tapes of desired width, along its length, before or after drawing, or even after heat-setting, by adjusting the spacing between the cutting edges, forming a plurality of uniaxially oriented drawn tapes. The quenched film may be passed continuously over a series of cutting edges although other techniques, such as slitting with lasers may also be employed.

A skilled person will understand that the edge trimming is performed at a temperature below the melting temperature of the polyester composition. The exact location of the edge trim during the tape manufacturing process is however less critical.

Following the extrusion, in step c), a plurality of tapes are produced from the polyester film. The production of tapes generally involves:
- slitting the polyester film into a plurality of tapes followed by drawing said plurality tapes to form a plurality of uniaxially oriented tapes; The draw ratio is preferably at least 3:1 while the temperature during drawing is preferably from 80°C to 120°C
- heat setting said drawn uniaxially oriented tapes. The heat setting is preferably carried out at a temperature of at least 150°C.

For slitting the film into a plurality of tapes, a certain width of both edges of the cast film (e.g. about 5 cm) are trimmed due to edge thickness defect and removed, and the remainder is slit into a multitude of tapes. This edge trim is recycled to the melt mixing device in step b) of the process according to the invention.

The polyester edge trim may be fed to slots with vacuum suction placed on either side of the film, and is sucked back to the melt mixing device to be re-melted and added to the feed polyester and optional additives. The edge trim may be added to the melt mixing device in different ways. It is possible to add the shredded trim to a hopper that is also used for delivering the additives, such as the polymeric anti-splitting additives. In another method, the edge trim is shredded and then fed to the melt mixing device through another hopper. This hopper may have a stirrer to prevent sticking and blocking of the shredded edge trim. It may have a crammer feeder that allows positive feeding of the shredded flakes to the twin screw compounding extruder. The same dosing unit and crammer may be used to feed the other powder or pellet additives (anti-split, anti-block, UV additive etc.) US patent 6,254,374 B1 shows a diagram of a crammer feeder and is given by way of reference. Preferably, the edge trim from the cast film is taken back from near the chill roller back to a shredder located next to the melt mixing device unit. This minimizes moisture pickup so that the I.V. drop is minimized and drying and crystallizing of the trim is avoided. Theoretically it would also be possible to feed the edge trim as a continuous trim directly to the melt mixing device. However such method is less preferred as it is technically more complex and more difficult to control. In addition the melt mixing with the other components may be more challenging.

As already described above, the moving tapes occasionally break and to avoid stopping of the line to remove broken tapes, these tapes are removed by suction means which allows a direct transport of the broken film to the melt mixing device. In another embodiment the broken tapes are collected and discharged as industrial waste.

### definition of tape

Within the context of the present invention, a tape in general is understood to be an unsupported section of plastic material with a low thickness in relation to its length and width. The dimensions of a tape may vary widely depending on the application, but usually a thickness is in the range of from 5 to 2000 µm, and a width may vary from 0.5 mm to 50 mm. In order for a tape to be weavable, i.e. to be suitable as a raw material for a woven fabric, the thickness is in the order of from about 5µm to 300µm and the width from about 0.5mm to 7 mm.

The width of a warp tape is usually smaller than the width of the weft tape, so that the upper limit for warp tape is preferably 5mm.

The length of a tape can be indefinite, as the tapes are normally made with a continuous extrusion process. A tape can be ready-made to its width via extrusion, but making a multitude of tapes simultaneously would need multiple expensive dies or spinnerets and drawing/winding equipment; as in multi-filament fibre spinning technology. Therefore, tapes are generally made on industrial scale by extruding a wider sheet or film, and subsequently slitting it into segments of desired width. A further advantage of this slitting technology is that tapes obtained have a well-controlled rectangular cross-section, which is desirable for uniform drawing behavior.

Preferably, the tape according to the present invention has a thickness of about 5 µm to about 250 µm.

More preferably the thickness of the tape is higher than 10 µm; 15 µm; 20 µm; 22 µm; 25 µm; 30 µm; 50 µm or 55 µm whereas it is lower than 100 µm; 80 µm; 70 µm or 60 µm. Lower thickness, especially below 20µm, of the tape causes friction and static problems during processing, making handling of the tapes difficult. Higher thickness of the tape generates difficulties in slitting the tape.

Preferably, the width of the tape according to the present invention is of about 0.5 to about 7 mm, more preferably higher than 0.7 mm, 0.8 mm, 0.9 mm, 1 mm and lower than 5 mm, 3 mm, 2.5 mm or 2 mm.

In a further step the tapes may be wound on a cylindrical bobbin which has an axial length that is greater than the width of the tape. Preferably the length of the bobbin is from about 15 to about 50cm for weaving tapes having a width less than or equal to 7mm.

Weavable tape, having a width of for example 3 mm may be wound to form bobbins having a length in axial direction of about 20 or 30 cm long. High speed cross-winders are preferably used for that purpose. The tape is wound on a flangeless cylindrical wind-up tube, and the assembly is then called a bobbin. The tapes have to be wound across the entire length of the tube so that the crossing layers create a firm package, with as few gaps as possible; but at the same time, the bobbins should have the capacity to be unwound easily for subsequent processing. The tape moves in a transverse direction across the bobbin length at an angle α, which is a function of a fixed transmission ratio between double stroke and spindle r.p.m. plus a transmission factor called δ-value, which is determined by the coil centres. To attain an acceptable appearance of the package, it is preferred to calculate the small additional δ-value. The second important factor to get an acceptable package is a minimized tape tension. An accurate mechanical transmission from the traverse mechanism to the tape is maintained by means of ceramic guides. Therefore it is preferred to have a tape surface with a low friction coefficient to ceramic surfaces, otherwise passing the tape guide would create excessive winding tension on the tape.

Drawing the solid film may be conducted before or after slitting the film into a plurality of tapes. Preferably, the quenched (cast) film is first slit into a plurality of tapes and then drawn as the film immediately after casting is not brittle and resistant to cutting; whereas if it is drawn and heat-set first, the film crystallizes and becomes harder and more brittle for slitting.

The solid film or the slit tapes have to be drawn lengthwise, *i.e.* plastically deformed in at least one direction, at a draw ratio, *i.e.* the ratio of the length of the plastically deformed film or tape in the direction of stretching to its original length in the same direction before stretching, of about 4.5:1 to about 7.5:1, preferably a draw ratio of at least 5:1; 5.3:1; 5.5:1 or 6:1 and at most 7:1; 6.5:1; 6.3:1; 6.2:1 or 6.1:1, to orient the film or the tapes and increase strength and tenacity thereof in the lengthwise direction. Higher draw ratios give higher modulus and tenacity, yet a too high a draw ratio would lead to breakage on line. Drawing may be accomplished by stretching the solid molten film or the tapes heated to a temperature above glass transition temperature of the polyester component to soften the film or the tapes and permit orientation of the polymer molecules.

Preferably, temperatures of about 75 °C to about 130°C are employed to facilitate stretching without breakage of the film or the tapes. Suitably, stretching is conducted by passing the slit tapes or by passing the film through a heating zone maintained at a certain temperature from feed rolls to take up rolls, with the latter rotating faster than the former to provide the desired degree of stretching. Typical heating zones may include an oven, a heated surface or other suitable means, preferably an oven. Average residence time of the film or the tapes in contacted with a heating zone may be from about 0.5 seconds to about 2 seconds.

Drawing may be conducted in one or more steps to achieve a final draw ratio of about 4.5:1 to about 7.5:1.

Preferably, drawing at a ratio of 5:1 to 6:1 is completed at about 85 °C to about 130°C, preferably at about 90 °C to about 100 °C in a single step to attain tapes, after slitting the solid film, having the desired a finished thickness at production speeds higher than 100 m/min, said tapes having tenacities of higher than 5 g/denier; preferably higher than 7 g/denier; most preferably higher than 7.5 g/denier (tensile strength of 945 MPa) and low shrinkage, e.g. less than 7 %, preferably less than 5 % at high temperatures, such as 130 °C.

Drawing is generally effected by guiding the amorphous film or tapes first over a set of feed rollers and then over a set of draw rollers that are operated at higher speed, with heating of the film. In order to control variations in draw ratio, preferably drawing is effected with feed and draw rollers, the speed of which can be controlled in such way that speed fluctuations of at most about 1% occur, more preferably speed fluctuations are at most about 0.7; 0.5 or 0.3%. Further, the film or tape thickness should be as uniform as possible; in this regard, it is preferred to draw a film or a tape after trimming the edges.

The drawing rate (take-up speed at the bobbins at the end of the line) may be at least about 1 m/min, preferably at least about 2, 3, 4, 5, 10, 15, 20, 50, or even 100 m/min and up to about 600, 550, 500, 400, 350, 250 or 200 m/min. Too high a drawing rate may induce breakage. Preferably, a plurality of tapes, typically in a number of about 200 to about 400 tapes can be drawn simultaneously at industrial speed of higher than 100 m/min. A current practical upper limit for the speed is about 400 m/min. The step of drawing the film or the tapes in the process according to the present invention may be performed continuously at said high drawing rates, without sticking and twinning of the slit tapes and without voids occurring and breakage of the film or the tapes, while still maintaining high mechanical properties of the product.

The step of heat-setting the uniaxially-oriented tapes obtained can be performed off-line but is preferably done in-line, using equipment and applying conditions known to a skilled person. Typically, the temperature for heat-setting is in the range of about 140 to about 250 °C; an additional low draw ratio, typically of about 1.05:1, is generally applied to prevent relaxation effects. Once heat-set, the tapes are stable and do not form ripples.

After heat-setting, the uniaxially-oriented polyester tapes according to the present invention can be wound up onto wind-up tubes by applying any conventional method, such as for example cross-winding. The polyester tapes may be wound across the entire length of a flangeless cylindrical wind-up tube so that the crossing layers create a firm package (i.e. cylindrical bobbins), with as few gaps as possible and at the same time keeping the capacity of the bobbins to be unwound easily for subsequent weaving in the loom. There are two winding methods generally known in the art, *i.e.* friction winding and cross-winding method, the latter being preferred according to the present invention as it gives a neater bobbin appearance. The number of the cross-winding machines in the tape production line may be between 100 and 600, depending on the width and the working width of different types of tape lines. Standard bobbins with regular shape that fit the weaving loom (*e.g.* cylindrical bobbins with no concave or convex shape-defects) can be obtained according to the present invention.

The tapes may further be subjected to one or more additional steps to establish other desired properties; like a chemical treatment step, a corona-treatment, or a coating step.

### Articles

The tapes according to the present invention can be used to make finished and semifinished articles, woven fabrics, suited for many - mainly industrial - end uses like geotextiles and the like, fibrillated tape yarn, twines, ropes, as metallic yarns, big packs, such as flexible intermediate bulk containers (FIBC), carpet backing.

### Apparatus

In an aspect the present invention relates to an apparatus for carrying out the process according to the invention. The apparatus comprising:
- one or more reactors for the polymerisation of feed polyester, an output of said reactors being connected to an input of at least one melt mixing device and means for measuring the viscosity of the feed polyester,
- at least one melt mixing device for melt mixing the feed polymer and optional additives, so as to form a polyester composition, said melt mixing device having an output connected to a film extrusion die and means for measuring the viscosity of said polyester composition,
- a film extrusion die for forming a molten film of the polyester composition,
- a polyester tape manufacturing line in series with the film extrusion die for the manufacture of (uniaxially oriented) polyester tape, said polyester tape manufacturing line having edge trim means and means for feeding edge trim to an input of said melt mixing device.

For the avoidance of doubt it is to be understood that the apparatus according to the invention is an integrated apparatus which does not contain any intermediate storage devices or the like that would allow the process to run in a substantially non-continuous manner. Similarly the process of the invention is an integrated process meaning that the process can be run continuously and wherein the steps for making the polyester tape are carried out consecutively, all on the same premises. In other words, the present invention can be said to be directed at an integrated process for the continuous production of polyester tape. In this respect that, even though less preferred, a process for making polyester involving a combination of melt polymerisation and solid state polymerisation is considered a process that is ran continuously.

It is noted that the invention relates to all possible combinations of features recited in the description, including the combination of features recited in the claims. It is further noted that the term 'comprising' does not exclude the presence of other elements. However, it is also to be understood that a description on a product comprising certain components also discloses a product consisting of these components. Similarly, it is also to be understood that a description on a process comprising certain steps also discloses a process consisting of these steps.

The invention will now be further elucidated :
Figure 1 schematically illustrates an embodiment of the system 100 for continuous production of polyester tape according to the present invention;
Figure 2 schematically illustrates an embodiment of the unit 101 for the preparation of the polyester melt composition and
Figure 3 schematically illustrates an embodiment of the compounding unit for preparing a molten polyester composition suitable for film production.
Figure 4 schematically illustrates another embodiment of the compounding unit for preparing a molten polyester composition suitable for film production.

First, an embodiment of a system for continuous production of polyester tape according to the present invention is discussed.

In a first unit, feed polyester having a desired melt viscosity is prepared. The polymerisation is performed under control of a first melt viscosity control unit which measures the melt viscosity of the feed polyester melt exiting from the first unit. There are control loop signals, wherein a first signal is an input for the first melt viscosity control unit and a second signal is an output signal from said control unit. The viscosity in the first unit may be controlled in a known manner, for example by controlling either one or more of temperature, pressure, (co)monomer ratio, catalyst concentration etc.

The feed polyester melt is fed to a melt mixing device unit. Optionally, a part of the feed polyester melt is fed to a unit for the preparation of polyester granules or flakes.

Melt mixing device unit is fed with a polymeric anti-splitting additive from an additive feed unit.

The melt mixing device unit prepares a polyester melt composition suitable for film production and feeds it to a polyester film production unit 1. The polyester film production unit prepares a polyester film from the polyester melt composition and feeds the polyester film to a polyester tape production unit. The film production unit comprises a flat die for extruding the polyester film and a chill roller for receiving and chilling the polyester film.

Polyester tape production unit receives the polyester film from the polyester film production unit and comprises an edge trimming device which trims the polyester film edges, to ensure an even thickness throughout the width of the polyester film and further to ensure a constant width of the polyester fil. The edge trims are collected by edge trim collection unit.

The polyester film is slit in the tape production unit into tapes by slitting knives, wherein the knives are spaced with a predetermined width. Occasionally some of the produced tapes may break after slitting. The broken tapes are collected by broken tape collection unit. The broken tape collection unit comprises any suitable container placed near the slitting knives for picking up the broken tapes.

The collected edge trim and broken tape are collected in a feed back unit where they may optionally be shredded and fed back to the melt mixing device unit.

A second melt viscosity control unit measures the melt viscosity of the polyester melt composition and controls the supply of polymeric anti-splitting additive and/or other additives like chain extenders to be fed from the additive feed unit, and the supply from feed back unit of the shredded edge trims from unit and the broken tapes from unit 105. There are further control loop signals, wherein a first further signal is an input for second control unit based on measurement of the melt viscosity of the polyester composition and second further signals 113 and 114 are output signals from the second control unit. The viscosity in the melt mixing unit is controlled by varying the amount of edge trim recycle fed to melt mixing device unit and/or by controlling the amount of additive, such as chain extenders, fed from unit. Other additives that influence the melt viscosity of the polyester composition prepared in unit may be controlled also based on output signal(s). For the purpose of explanation only a single control unit with single output signals has been mentioned. However a skilled person will understand that in fact the first control unit and the second control unit may have multiple outputs based on the number of parameters to be controlled.

In the following, an embodiment of the first unit for the preparation of the feed polyester composition is described. Polyester preparation unit has a paste mixing vessel, at least one esterification reactor, a first pre-polycondensation reactor, a second pre-polycondensation reactor, and a finisher reactor. Various variations to these reactors are possible. Industrial polymerization lines with a single pre-polymerisation reactor, and also polymerization lines with just one paste mixing vessel, one esterification reactor and one finisher are also known.

In the above described polyester preparation unit, a dialcohol-based compound and a dicarboxylic acid-based compound are fed to paste mixing vessel. The paste is then fed into the at least one esterification reactor. The output of esterification reactor is fed into the pre-polycondensation reactor. The output of the second pre-polymerisation reactor is the first polyester melt composition, This first polyester melt composition is fed into and subjected to the finisher reactor.

The melt viscosity of the output of the finisher reactor, the feed polyester melt, is controlled by the first viscosity control unit. The melt viscosity is preferably controlled by varying the under pressure or vacuum of finisher reactor. As set out above, when the melt viscosity is higher than a target viscosity, the vacuum is reduced, i.e. pressure increases, whereas if the melt viscosity is lower than the target viscosity, the vacuum is increased, i.e. pressure is reduced.

Further, there is an embodiment of the melt mixing device unit for preparing the polyester melt composition suitable for film production from the feed polyester. The melt mixing device unit according to this embodiment comprises an extruder, the feed back unit for shredded edge trim and/or broken tape, and the feed unit for one or more additives. Compounding unit has an inlet for the feed polyester melt composition from the polyester preparation unit, i.e. from the finisher reactor and an outlet for feeding the third polyester melt composition to the flat die of the polyester film production unit.

The (polymeric) additives in feed unit comprise the anti-splitting additives such as LLDPE, LDPE and the like. In a preferred embodiment feed unit is also used to add chain extenders. The feed back unit can have an impeller to add the edge trim and broken tape shreds into the extruder. The extruder is preferably a high shearing twin screw extruder as described above.

There is an alternative embodiment of the melt mixing device unit for preparing the polyester melt composition suitable for film production from the feed polyester. Compared to the embodiment discussed before, the feed unit and feed back unit are combined in a single feed stream to melt mixing device. In addition to that a degasser is added to the extruder so as to remove low molecular weight materials and residual moisture from the melt mixing device.

## Claims

1. An integrated process for the production of polyester tape, comprising the steps of
a) preparing feed polyester comprising a polymerisation reaction in one or more reactors in series and measuring the viscosity of the obtained feed polyester,
b) feeding the feed polyester obtained from step a) and optional additives to a melt mixing device, mixing said feed polyester and said optional additives so as to form a molten polyester composition and measuring the viscosity of the obtained polyester composition
c) extruding the molten polyester composition through a film extrusion die thereby forming a molten film of said polyester composition,
d) preparing a polyester tape from said molten polyester film, said preparing comprising trimming the edges of the film at a stage where said film is below its melting temperature,
e) feeding at least a part of the trimmed edges obtained in step d) in-line to the melt mixing device in step b).
wherein the amount of trimmed edges and optional further additives fed to the melt mixing device in step b) is controlled on the basis of the measured viscosity of the polyester composition.

2. The process of claim 1 wherein the viscosity of the polyester composition is controlled such that the viscosity varies at most 10%, more preferably at most 5% with respect to a target value.

3. The process of claim 1 or 2 wherein the trimmed edges are transported to the melt mixing device at least in part in an environment having a relative humidity of at most 10% when measured at 25°C and atmospheric pressure.

4. The process of any one or more of claims 1 - 3 wherein the trimmed edges are transported at least in part through protective tubes.

5. The process of any one or more of claims 1 - 4 wherein the polyester is polyethylene terephthalate (PET) or polyethylene naphthalate (PEN)

6. The process of any one or more of claims 1 - 4 wherein the polyester is polyethylene terephthalate and the intrinsic viscosity of the feed polyester is at least 0.5 dl/g.

7. The process of any one or more of claims 1 - 6 wherein the additives in step b) comprises at least a chain extender.

8. The process of claim 7 wherein the chain extender is a linear chain extender.

9. The process of any one or more of claims 1 - 8 wherein the feed polyester is prepared using a melt polymerisation process in one or more melt polymerisation reactors and wherein the polyester melt from said one or more reactors is fed directly to the melt mixing device of step b).

10. The process of any one or more of claims 1 - 9 wherein the viscosity of the feed polyester and/or the polyester composition is the melt viscosity.

11. The process of any one or more of claims 1 - 10 wherein the tape is a uniaxially oriented polyester tape and wherein :
- step c) further comprises cooling of the molten polyester film to below its melting temperature
- step d) further comprising slitting the polyester film into a plurality of tapes followed by drawing said plurality tapes at a draw ratio of at least 3:1 at a temperature of from 80°C to 120°C and heat setting said drawn tapes at a temperature of at least 150°C.

12. Apparatus for carrying out the process of any one or more of claims 1 - 11 comprising:
- one or more reactors for the polymerisation of feed polyester, an output of said reactors being connected to an input of at least one melt mixing device, and
- means for measuring the viscosity of the feed polyester,
- at least one melt mixing device for melt mixing the feed polymer and optional additives, so as to form a polyester composition, said melt mixing device having an output connected to a film extrusion die, and
- means for measuring the viscosity of said polyester composition,
- a film extrusion die for forming a molten film of the polyester composition,
- a polyester tape manufacturing line in series with the film extrusion die for the manufacture of polyester tape, said polyester tape manufacturing line having edge trim means and means for feeding edge trim to an input of said melt mixing device.

## Patentansprüche

1. Integriertes Verfahren für die Herstellung von Polyesterband, umfassend die Schritte:
a) Herstellen von Feed- bzw. Beschickungs-Polyester, umfassend eine Polymerisationsreaktion in einem oder mehreren Reaktoren in Reihe und Messen der Viskosität des erhaltenen Beschickungs-Polyesters,
b) Zuführen des aus Schritt a) erhaltenen Beschickungs-Polyesters und von optionalen Additiven in eine Schmelzmischvorrichtung, Mischen des Beschickungs-Polyesters und der optionalen Additive, so dass eine geschmolzene Polyesterzusammensetzung gebildet wird, und Messen der Viskosität der erhaltenen Polyesterzusammensetzung,
c) Extrudieren der geschmolzenen Polyesterzusammensetzung durch eine Folienextrusionsdüse, wodurch ein geschmolzene Folie der Polyesterzusammensetzung gebildet wird;
d) Herstellen eines Polyesterbands aus der geschmolzenen Polyesterfolie, wobei das Herstellen das Beschneiden der Kanten der Folie in einem Stadium, in dem die Folie sich unter ihrer Schmelztemperatur befindet, umfasst;
e) Zuführen wenigstens eines Teils der in Schritt d) erhaltenen beschnittenen Kanten in-line zu der Schmelzmischvorrichtung in Schritt b);
wobei die Menge der beschnittenen Kanten und optionalen weiteren Additive, die der Schmelzmischvorrichtung in Schritt b) zugeführt werden, auf Basis der gemessenen Viskosität der Polyesterzusammensetzung reguliert wird.

2. Verfahren gemäß Anspruch 1, wobei die Viskosität der Polyesterzusammensetzung so reguliert wird, dass die Viskosität um höchstens 10%, stärker bevorzugt höchstens 5%, bezüglich des Zielwerts variiert.

3. Verfahren gemäß Anspruch 1 oder 2, wobei die beschnittenen Kanten zu der Schmelzmischvorrichtung wenigstens zum Teil in einer Umgebung mit einer relativen Feuchtigkeit von höchstens 10%, gemessen bei 25°C und Atmosphärendruck, transportiert werden.

4. Verfahren gemäß einem Beliebigen der Ansprüche 1 - 3, wobei die beschnittenen Kanten wenigstens zum Teil durch Schutzrohre transportiert werden.

5. Verfahren gemäß einem Beliebigen der Ansprüche 1 - 4, wobei der Polyester Polyethylenterephthalat (PET) oder Polyethylennaphthalat (PEN) ist.

6. Verfahren gemäß einem Beliebigen der Ansprüche 1 - 4, wobei der Polyester Polyethylenterephthalat ist und die intrinsische Viskosität des Beschickungs-Polyesters wenigstens 0,5 dl/g beträgt.

7. Verfahren gemäß einem Beliebigen der Ansprüche 1 - 6, wobei die Additive in Schritt b) wenigstens einen Kettenverlängerer umfassen.

8. Verfahren gemäß Anspruch 7, wobei der Kettenverlängerer ein linearer Kettenverlängerer ist.

9. Verfahren gemäß einem Beliebigen der Ansprüche 1 - 8, wobei der Beschickungs-Polyester mit Hilfe eines Schmelzpolymerisationsverfahrens in einem oder mehreren Schmelzpolymerisationsreaktoren hergestellt wird und wobei die Polyesterschmelze aus dem einen oder mehreren Reaktoren direkt der Schmelzmischvorrichtung von Schritt b) zugeführt wird.

10. Verfahren gemäß einem Beliebigen der Ansprüche 1 - 9, wobei die Viskosität des Beschickungs-Polyesters und/oder der Polyesterzusammensetzung die Schmelzviskosität ist.

11. Verfahren gemäß einem Beliebigen der Ansprüche 1 - 10, wobei das Band ein uniaxial orientiertes Polyesterband ist und wobei:
- Schritt c) ferner das Kühlen der geschmolzenen Polyesterfolie auf unter ihre Schmelztemperatur umfasst;
- Schritt d) ferner das Aufschlitzen der Polyesterfolie in eine Vielzahl von Bändern umfasst, gefolgt von einem Ziehen bzw. Strecken der Vielzahl von Bändern in einem Streckverhältnis von mindestens 3:1 bei einer Temperatur von 80°C bis 120°C und Thermofixieren der gereckten Bänder bei einer Temperatur von wenigstens 150°C.

12. Apparatur zur Durchführung des Verfahrens gemäß einem Beliebigen der Ansprüche 1 - 11, umfassend:
- einen oder mehrere Reaktoren für die Polymerisation des Beschickungs-Polyesters, wobei ein Output der Reaktoren mit einem Input von wenigstens einer Schmelzmischvorrichtung verbunden ist, und
- Mittel zum Messen der Viskosität des Beschickungs-Polyesters,
- wenigstens eine Schmelzmischvorrichtung zum Schmelzmischen des Beschickungs-Polymers und von optionalen Additiven, so dass eine Polyesterzusammensetzung gebildet wird, wobei die Schmelzmischvorrichtung einen mit einer Folienextrusionsdüse verbundenen Output hat, und
- Mittel zum Messen der Viskosität der Polyesterzusammensetzung,
- eine Folienextrusionsdüse zum Bilden einer geschmolzenen Folie der Polyesterzusammensetzung,
- eine Polyesterband-Fertigungsstraße in Reihe mit der Folienextrusionsdüse für die Fertigung von Polyesterband, wobei die Polyesterband-Fertigungsstraße Kantenbeschneidungseinrichtungen und Einrichtungen zum Zuführen von Kantenbeschnitt zu einem Input der Schmelzmischvorrichtung aufweist.

## Revendications

1. Procédé intégré de production de bande de polyester, comprenant les étapes consistant à
a) préparer un polyester d'entrée comprenant une réaction de polymérisation dans un ou plusieurs réacteurs en série et mesurer la viscosité du polyester d'entrée obtenu,
b) introduire le polyester d'entrée obtenu dans l'étape a) et des additifs facultatifs dans un dispositif de mélangeage à l'état fondu, mélanger ledit polyester d'entrée et lesdits additifs facultatifs de sorte à former une composition de polyester fondue et mesurer la viscosité de la composition de polyester obtenue
c) extruder la composition de polyester fondue à travers une filière d'extrusion de pellicule pour former une pellicule fondue de ladite composition de polyester,
d) préparer une bande de polyester à partir de ladite pellicule de polyester fondue, ladite préparation comprenant le détourage des bords de la pellicule à un stade dans lequel ladite pellicule présente une température inférieure à sa température de fusion,
e) introduire au moins une partie des bords détourés obtenus dans l'étape d) de façon intégrée au dispositif de mélangeage à l'état fondu de l'étape b),
où la quantité de bords détourés et d'additifs supplémentaires facultatifs introduits dans le dispositif de mélangeage à l'état fondu dans l'étape b) est contrôlée à partir de la viscosité mesurée de la composition de polyester.

2. Procédé selon la revendication 1, où la viscosité de la composition de polyester est contrôlée de sorte à ce que la viscosité varie d'un maximum de 10 %, plus préférentiellement d'un maximum de 5 % par rapport à une valeur cible.

3. Procédé selon la revendication 1 ou 2, où les bords détourés sont transportés jusqu'au dispositif de mélangeage à l'état fondu au moins en partie dans un environnement d'humidité relative d'un maximum de 10 % lorsqu'elle est mesurée à 25 °C et à pression atmosphérique.

4. Procédé selon l'une quelconque ou plusieurs des revendications 1 à 3, où les bords détourés sont transportés au moins en partie à travers des tubes protecteurs.

5. Procédé selon l'une quelconque ou plusieurs des revendications 1 à 4, où le polyester est le polyéthylène téréphtalate (PET) ou le polyéthylène naphtalate (PEN).

6. Procédé selon l'une quelconque ou plusieurs des revendications 1 à 4, où le polyester est le polyéthylène téréphtalate et la viscosité intrinsèque du polyester d'entrée est d'au moins 0,5 dl/g.

7. Procédé selon l'une quelconque ou plusieurs des revendications 1 à 6, où les additifs de l'étape b) comprennent au moins un agent d'extension de chaîne.

8. Procédé selon la revendication 7, où l'agent d'extension de chaîne est un agent d'extension de chaîne linéaire.

9. Procédé selon l'une quelconque ou plusieurs des revendications 1 à 8, où le polyester d'entrée est préparé en utilisant un procédé de polymérisation à l'état fondu dans un ou plusieurs réacteurs de polymérisation à l'état fondu et où le polyester fondu issu du ou desdits réacteurs est introduit directement dans le dispositif de mélangeage à l'état fondu de l'étape b).

10. Procédé selon l'une quelconque ou plusieurs des revendications 1 à 9, où la viscosité du polyester d'entrée et/ou de la composition de polyester est la viscosité à l'état fondu.

11. Procédé selon l'une quelconque ou plusieurs des revendications 1 à 10, où la bande est une bande de polyester orientée de façon uniaxiale et où :
- l'étape c) comprend en outre le refroidissement de la pellicule de polyester fondue jusqu'à une température inférieure à sa température de fusion
- l'étape d) comprend en outre le fendage de la pellicule de polyester en une multitude de bandes suivi de l'étirage de ladite multitude de bandes avec un rapport d'étirage d'au moins 3:1 à une température comprise entre 80 °C et 120 °C et le thermodurcissage desdites bandes étirées à une température d'au moins 150 °C.

12. Appareil de mise en oeuvre du procédé selon l'une quelconque ou plusieurs des revendications 1 à 11 comprenant :
- un ou plusieurs réacteurs de polymérisation du polyester d'entrée, une sortie desdits réacteurs étant connectée à une entrée d'au moins un dispositif de mélangeage à l'état fondu, et
- un moyen de mesure de la viscosité du polyester d'entrée,
- au moins un dispositif de mélangeage à l'état fondu pour mélanger à l'état fondu le polymère d'entrée et les additifs facultatifs, de sorte à former une composition de polyester, ledit dispositif de mélangeage à l'état fondu ayant une sortie connectée à une filière d'extrusion de pellicule, et
- un moyen de mesure de la viscosité de ladite composition de polyester,
- une filière d'extrusion de pellicule pour former une pellicule fondue de la composition de polyester,
- une ligne de fabrication de bande de polyester en série avec la filière d'extrusion de pellicule pour la fabrication de bande de polyester, ladite ligne de fabrication de bande de polyester ayant un moyen de détourage de bords et un moyen d'introduction des bords détourés dans une entrée dudit dispositif de mélangeage à l'état fondu.
